# EUROPEAN PATENT APPLICATION

(11) **EP 1 369 045 A2**
(43) Date of publication of application: **10.12.2003**
(21) Application number: 03253343.2
(22) Date of filing: 28.05.2003
(51) Int. Cl.: A23L 3/3463, A23B 4/22, A23B 4/10, A22C 13/00, A22C 13/02

(54) **Films and casing having anti-listeria properties**

(30) Priority: 28.05.2002 US 383107 P; 16.01.2003 US 440551 P; 23.05.2003 US 443855 P
(71) Applicant: Viskase Corporation, Willowbrook, Illinois 60527 (US)
(72) Inventor: Gaynor, Dennis A., Chicago, Illinois 60622 (US); Nicholson, Myron D., Lemont, Illinois 60439 (US); DuCharme, Paul E., Jr., Tinley Park, Illinois 60477 (US)
(74) Representative: W.P. THOMPSON & CO.

(57) **Abstract**

This invention describes the protcction of meat products against *Listeria monocytogenes* by treating casing with a bacteriocin, nisin, and the antioxidant erythorbate containing shirring solution, wherein the meat product incorporates a bacteriostatic agent of potassium or sodium salts of diacetic acid or lactic acid and wherein the particle size of nisin is much smaller than that found commercially.

## Description

### Field of the Invention

The invention is in the field of food processing and packaging films having anti-Listeria properties and related food products.

### Background of the Invention

Food casings composed of a tubular cellulose film, where the process to produce the cellulosic film is through cellulose regeneration or derivatization, are well known in the art, and are commonly used in the manufacture of various food products such as frankfurters. (Although the terms "frankfurter" or "sausages" arc used throughout this application, thcsc terms arc intended to include any foodstuff, such as cheese, meats, poultry, meat-substitutes, or processed meats and poultry, that is capable of being cooked and processed in a casing-like film or closed package.) Tubular, polymeric films are also well known in the art, and are used similarly as is the cellulosic casing. These casings may, among other things, be mono- or multi- layer, may have a fibrous layer, or have a porous layer bonded to a nonporous layer. They may be made as tubes, or as films that are bonded together in a way to turn flat sheets into tubes or bags. All the various permutations of both the cellulosic and plastic casings are well known.

In use, long lengths of the tubular casing are gathered or "shirred" to much shorter lengths called sticks. A shirring solution is generally applied prior to shirring, to the inside of a casing by a number of methods, such as slugging or spraying. These methods are well-known in the art. A stick of cellulosic casing 45 to 63 cm long may contain upwards of 30 to 75 meters or more of casing. The stick is used by placing it onto the stuffing horn of an automatic stuffing machine. A meat or poultry emulsion or other food composition is stuffed into the casing under high speeds and pressures. During the course of stuffing, the automatic stuffing machine forms the long lengths of casing into shorter links, such as sausages, by twisting, clipping, or crimping the casing.

After the casing is stuffed, it is processed by cooking, smoking or otherwise pasteurizing (all hereinafter referred to as "processing") to produce a ready to eat ("RTE") food product. Because the cellulose casing is not edible, generally, after cooking, it is peeled off the food to form the familiar skinless frankfurter, sausage, or deli product. The peeled frankfurters are then packaged for direct retail sale. Frankfurters also are packaged in bulk for sale and use by institutions or food services or for sale to retail outlets that in turn sell to the final consumer.

A problem that is becoming more acute in the manufacture and sale of frankfurters and other RTE foods is the contamination of the food by *Listeria* species of bacteria Initially, the cooking of the food product while in the casing produces a pathogen-free product, and after cooking, the food product remains pathogen-free because the cellulose casing serves as an effective barrier to the passage of pathogens through the casing to the surface of the food product within the casing. However, this barrier is lost once the casing is peeled from the food, i.e., to produce a skinless sausage. Accordingly, during the course of peeling and repackaging, generally in vacuum packaging, the surface of the frankfurter is prone to contamination by contact with the surfaces of the peeling and packaging machinery, by human handling, and by airborne bacteria.

*L. monocytogenes* is well known as a particularly virulent human pathogen, producing a fatality rate of about 25% when contracted, particularly when encountered by individuals that are immunosuppressed, such as those with HIV or those undergoing chemotherapy, pregnant women, and the elderly. Although contamination of food by any food pathogen is of concern, contamination by L. monocytogenes is of particular concern because it reproduces and grows in both aerobic and anaerobic environments and at normal refrigeration temperatures. Therefore, vacuum packaging and refrigeration alone may be ineffective to retard growth. A risk of food poisoning occurs when foods are consumed without sufficient reheating to kill such pathogenic bacteria that may have been introduced inadvertently onto the food surface after initial cooking and that survive in the package during refrigerated storage.

Antibacterials that are bactericidal will kill bacteria, while those that are bacteriostatic slow down their growth. Both modes of action are desirable in the effort to reduce or eliminate *Listeria* contamination, as in the situation where the bactericide does not eliminate all pathogens present on a food and then the bacteriostat would inhibit the regrowth of any remaining pathogens. This is particularly desirable in food products described herein, as frankfurters may be stored for up to about 80 days prior to the consumer's cooking and eating the product. Even under refrigeration, *Listeria* has the ability to grow to high enough levels to be pathogenic to various degrees. Therefore, a particularly useful antibacterial agent must have the ability to be both bactericidal and bacteriostatic.

One class of antibacterials are lanthionine bacteriocins, which are well known in the art. In fact, the term "lantibiotics" was coined by Schnell et al. (1988 Nature 333: 276-278) to describe a group of bacteriocins, including nisin, which contain the amino acid lanthionine and other non-modified amino acids. The common properties of these bacteriocins are reviewed by Kellner et al. (1988 Eur. J. Biochem 177:53-59). Other members of this group include subtilin, pep 5, epidermin, gallidermin, cinnamycin, duramycin, and ancovenin. These ribosomally synthesized peptide antibiotics contain from 19 to 34 amino acids and are produced by various microbes including those of the *Staphylococcus, Bacillus, Lactobacillus,* and *Streptomyces* species. In addition to their unique composition of non-modified amino acids, they can be distinguished from other polypeptide antibiotics on the basis of their specificity. Lantibiotics are characterized by a very narrow spectrum of action. Thus, only a few species of bacteria are sensitive to a particular bacteriocin at practical concentrations. This is in contrast with other broad spectrum polypeptide antibiotics, such as polymyxin B1, which are active against most bacteria and the lytic peptides discussed by Jaynes et al., in published international application WO 89/00194, which are active against most bacteria, yeasts and even mammalian cells.

Nisin is the collective name describing several closely related substances which exhibit similar amino acid compositions and some limited range of antibiotic activity, and have been designated as A, B, C, D and E. This phenomenon is discussed by E. Lipinska in "Antibiotics and Antibiosis in Agriculture", (M. Woodbine, Ed.), pp. 103-130. Nisin normally occurs as a single unit peptide whose structure has been determined as described below. It occasionally occurs as a dimer with a molecular weight of about 7000 or higher. It contains several uncommon amino acids, including b-methyllanthionine, dehydroalanine, and lanthionine, among its total of 34 amino acids. The peptide contains five thio-ether linkages that contribute to its stability in acid solution. Nisin is one of the most thoroughly characterized bacteriocins, and shares remarkable homology of structure and action with other lantibiotics such as subtilin and epidermin [Buchman et al. 1988 J. Bio. Chem 263 (31):16260]. Recent reviews of nisin, its physical properties and uses include, "Bacteriocins of Lactic Acid Bacteria", T. R. Klaenhammer, 1988 Biochimie 70:337-349; "Nisin", A. Hurst, 1981 Appl. Microbiol. 27:85-121; and U.S. Patent 4,740,593. In addition to the disclosure in '801, the use of nisin to combat *L. monocytogenes* has been reported by M. Doyle, "Effect of Environmental and Processing Conditions on *Listeria monocytogenes",* Food Technology, 1988, 42(4): 169-171. This reference describes the initial inhibition of the organisms growth (for about 12 hours) and reports that it may grow at a pH level as low as 5.0 and is resistant to alkaline pH with the ability to grow at pH 9.6.

US Patents 5,573,801 ('"801"), 5,573,797 ("'797"), and 5,573,800 ("'800") address the problem *of Listeria* contamination of a cooked food such as frankfurters by applying a lanthionine bacteriocin to the surface of the meat after cooking. These patents teach that nisin is a preferred lanthionine and that a composition comprising nisin and a chelating agent is particularly effective against *L*. *monocytogenes* and other gram positive bacteria. These patents are incorporated herein by reference.

In '801, the nisin-chelator composition is said to be applied as a dip or spray or as a coating applied to a wrapping of the meat product. Its use to prevent *Listeria* growth on frankfurters is specifically mentioned. Also mentioned is the use of the nisin-chelator composition as a component of the shirr spray applied to the interior of a cellulose food casing later used to make frankfurters.

In not only '801, but also both '800 and '797, another bacteriocin is taught that is effective against *L*. *monocytogenes.* Pediococcus bacteria also produce useful bacteriocins. Pediococci are lactic acid bacteria used as starter cultures in the manufacture of fermented sausages. Pediococci are known to inhibit the growth of both pathogenic and spoilage microorganisms. Bacteriocin from various species of Pediococci are known to be effective to inhibit, kill or prevent the growth of *L.* monocytogenes. In particular, bacteriocin from *Pediococcus acidilactici* are known to be effective against *L*. *monocytogenes.*

In the processing of frankfurters an internal temperature of about 160°F (71°C) should be reached to insure that the meat emulsion has been cooked. To reach this internal temperature, the stuffed casing is exposed to a higher temperature of about 180°F to about 190°F (82°C to about 88°C) for a time sufficient to reach the required internal temperature. The time period needed to reach these internal temperatures varies depending upon the cooking system and usually may vary from about 45 to 90 minutes. Such prolonged exposure to these higher temperatures tends to diminish the effectiveness of the bacteriocin applied to the interior surface of the casing. The inhibitory effect of the nisin-chelator composition disclosed in '801 was shown to survive, to some extent, the cooking temperatures of processed meats. However, while the nisin-chelator combination disclosed in '801 was effective to transfer some degree of protection to the surface of the frankfurter after cooking and peeling, a still greater degree of concentration of active ingredient, heat resistance of the bacteriocin, and reliability is desired to insure that a biologically effective amount of the bacteriocin survives the heat treating temperatures and is transferred to the surface of the frankfurter in contact with the casing. It is believed that the same problems of heat-resistance and reliability are also believed to occur with other bacteriocins, including pediocin.

Uses of nisin and nisin compositions have been disclosed in a number of patents, particularly by combining more than one bacteriocin with chelating agents and surfactants (US 4,980,163); the treatment of conditions in the oral cavity with the use of a lanthionine-containing bacteriocin (US 5,135,910); a method of enhancing bactericidal activity by combining the bacteriocin with a chelator (US 5,217,950 and US 5,260,271 and 5,753,614); and enhancing bactericidal activity by a composition of a lanthionine-containing bacteriocin and a surfactant (US 5,691,301). These patents are incorporated herein by reference.

Another class of compounds known to inhibit the growth of pathogens in food are alpha and beta-hop acids, and hop acid derivatives. These compounds have been extracted from hops. Hop acids and resins are known to be primarily active against gram positive bacteria, including the *Listeria* species, with a lesser degree of activity seen against gram negative organisms. The use of these beta-acids to prevent contamination of food by Listeria is described in U.S. Patent 5,286,506.

Other hop acids, such as hexahydrolupulone have been shown to inhibit the growth of certain Lactobacillus species, as described in U.S. Patent 5,082,975, while in U.S. Patent 5,455,038, tetrahydorisohumulone and hexahydrocolupulone, hop acid derivatives, were shown to inhibit *Listeria*.

Bacteriostatic agents are well-known in the art of food manufacturing, for example, a mixture of potassium or sodium lactate and potassium or sodium diacetate is a known bacteriostatic composition. These salt mixtures are commercially available as PURASAL® Optiform™-4, sold by Purac America, located in Blair, Nebraska, USA. This Purac® product, or other salts or mixtures thereof, are often added to a meat emulsion by processed meat manufacturers as a bacteriostatic agent against any *Listeria* present in their final products. A composition such as PURASAL salts is incorporated in the food product and distributed throughout a food emulsion.

### SUMMARY OF THE INVENTION

The present invention provides a novel antibacterial composition that is effective against *Listeria monocytogenes* on processed foodstuffs. The inventive composition is bactericidal against *Listeria* on processed foodstuffs and comprises a solution of nisin and antioxidants, such as ascorbates and erythrobates. The nisin may be protected from agents that cause degradation, such as water, heat, or liquid smoke through among other things, encapsulation with a protective agent.

Another embodiment of the present invention is a cellulosic or polymeric film or casing containing on its food contacting surface, a solution of nisin and antioxidants such as ascorbates and erythrobates, at a concentration that shows bactericidal efficacy against *Listeria* species on foodstuffs processed within such coated films and casings, when compared to film or casing that does not contain such solution. As stated above, the nisin may be protected through, for example, encapsulation to protect its efficacy and to prolong its storage life

Another embodiment of the present invention is a method of reducing and inhibiting the growth of *L*. *monocytogenes* on the surface of food that has been thermally processed, which comprises coating the food-contacting surface of a cellulosic or polymeric casing and stuffing the coated casing with foodstuffs such as cheese, meats, poultry, meat-substitutes, or processed meats, such as frankfurters and sausages, and processed poultry which contain a bacteriostatic agent such as ascorbates or erythrobates.

The present invention also provides an antibacterial system to reduce *Listeria* contamination of processed foodstuffs comprising encasing foodstuffs containing salts such as sodium or potassium lactate and sodium or potassium diacetate in amounts that give a bacteriostatic effect against *Listeria* in the processed foodstuff, in a casing having a food contacting inner surface containing an antibacterial composition of nisin, which may be treated to be protected from degradation, together with an antioxidant in amounts effective to kill at least a portion of any *Listeria* present in the processed foodstuff, processing the encased foodstuffs, and either removing or leaving the casing on the foodstuff. The antibacterial nisin composition will have transferred to the surface of the processed foodstuff, which contains the salts that have bacteriostatic activity, and therefor, any *Listeria* present on the surface of the processed foodstuff will be exposed to both an antibacterial that is abactericide and salts that are bacteriostatic to *Listeria.*

The present invention also provides a cooked foodstuff containing salts such as sodium or potassium lactate and sodium or potassium diacetate and having on its surface an effective bactericidal coating of nisin.

Additionally, other bacteriocins, including pediocin, may be used in place of or in combination with nisin, and may be protected through, for example, encapsulation in any of the uses described above.

The present invention can thus provide a composition that is bactericidal against *Listeria* species and that is suitable for use in the preparation of processed food.

The present invention can ameliorate the risk of bacterial contamination in processed foods byproviding a food packaging material, especially a cellulose food casing containing an antibacterial that is abactericide, such as nisin, that is capable ofbeing transferred to the surface of a food product processed in the packaging or casing, and where an amount of nisin effective to kill *Listeria* remains on the food surface after processing, once the packaging is removed.

The invention can furtherprovide an antibacterial system for the reduction of *Listeria* on the surface of processed foods comprising a cellulose orplastic packaging film containing on its food contacting surface an amount of a bactericidal composition which is transferable to a food product processed or packaged in the cellulose orplastic film so as to kill *L. monocytogenes,* and wherein the food product contains abacteriostatic composition, and any *L. monocytogenes* that is not destroyed has its growth inhibited.

The invention can moreover provide a method of processing foodstuffs containing a bacteriostatic agent using casings that are internally coated with a bactericidal antimicrobial composition, and once the foodstuff is removed from the processing casing, it maintains bactericidal and bacteriostatic efficacy against *L*. monocytogenes.

The invention can also provide a cooked foodstuff prepared by a method of this invention having a surface at least partially coated with an antibacterial composition, and that is resistant to *Listeria.*

### DETAILED DESCRIPTION OF THE INVENTION

Anovel antibacterial composition comprising an aqueous composition ofnisin and an antioxidant has been discovered to have unexpected bactericidal properties against the *Listeria* species of bacteria, and in particular, *L. monocytogenes,* particularly when used on foodstuffs to be thermally processed. Currently, the nisin is available only on non-soluble carriers, so the composition is actually a dispersion, but the nisin alone is water-soluble, and will form a solution inwater. When this antibacterial composition is used on film or casing as described below, in the processing offoodstuffs that contain bacteriostatic salts, the safety of food in storage is prolonged in a two-step manner: firstly, by reducing the raw numbers of live *Listeria* that are contaminants in foodstuffs that are to be, or have been, processed, by the bactericidal effect of nisin, and secondly, by inhibiting the growth of any *Listeria* remaining on or in the processed foodstuffs through the bacteriostatic activity ofthe bacteriostatic salts.

Nisin is a known food preservative that is also known to be heat-stable, acid-stable and active against gram positive bacteria. Nisin is used as a food preservative in dairy products and vegetables usually in conjunction with heat treatment. Nisin also occurs naturally in raw milk and has been used in heat processing of meat pastes. Nisin is considered to be nontoxic with toxicological data indicating no adverse effects at levels of 3.3 million IU per kg of body weight. It reportedly can stand heating to 121°C. without loss of activity.

Nisin is commercially available from Rhodia Inc., of Cranbury, New Jersey, USA, in a standardized preparation under the trademark Novasin J and as Nisaplin® from Aplin & Barrett Ltd., Trowbridge, Wiltshire, England. Novasin contains 1 million International Units of nisin/gram of Novasin, or in other words has a concentration of nisin of approximately 2.0%, while Nisaplin® has a concentration of about 2.5% nisin. A typical composition of Nisaplin® also includes, approximately, 77.5% sodium chloride, 12% protein, 6% carbohydrate, and 2% moisture. Novasin is the material used throughout the following examples.

The antibacterial compositionmay contain an antioxidant. It is believed by the inventors that the addition of an antioxidant to the nisin increases the effectiveness of the nisin as a bactericide. Examples of acceptable antioxidants are tocopherol (Vitamin E), ascorbate, sodium erythorbate (sodium isoascobate), tea extract or other extracts of Labiatae plants such as rosemary, sage or thyme extracts. Vitamin E is a preferred antioxidant. While antioxidants are not limited to any particular class, some well-known antioxidants also include aromatics such as, gallic acid, pyrogallol and its salts and esters such as propyl gallate; dioctanyl phthalate; hydroxylated toluenes and benzenes such as BHA and BHT; and inorganics such as salts of dithionite and bisulfite. It is believed that any material that prevents nisin from sharing its unbonded electrons with, for example, atmospheric oxygen, could well serve the purpose of the antioxidant used herein. In this invention, particularly preferred antioxidants are ascorbate and erythorbate.

A preferred salt having bacteriostatic properties and being acceptable for use in food (hereinafter defined as "acceptable salt"), such as that sold by Purac®, called PURASAL® Optiform™-4, which is a mixture of sodium or potassium lactate and sodium or potassium diacetate. Other acceptable salts of lactic acid and acetic acid are also used in food processing as a method to reduce contamination by *Listeria* of processed foodstuffs. Use of single acceptable salts or mixtures are both envisioned in the present invention. It is believed that through the effects of osmotic pressure produced by salts on the bacterial cell wall, irreversible damage is caused to the affected bacteria. It is hypothesized that the acceptable salts that are useful in this invention work in a similar way. Examples of other acceptable salts (provided they are acceptable for use in food) are the lithium, sodium, potassium, calcium, magnesium, silver and ammonium salts of mineral acids such as sulfuric, hydrochloric, phosphoric and nitric acid, and of organic acids such as formic, acetic, proprionic, butyric, caproic, benzoic, toluic, and higher chain aliphatic lactates. Also, aromatic carboxylic acids and those that are mixed in nature such as, methyl, benzene or toluenesulfonic acid. The limitation on what salts may be used is that of toxicity, as not all of the above potentially acceptable salts are approved for human consumption. Purac®'s PURASAL® Optiform™-4 is an acceptable salt composition, and is approved for use in food in the United States. Currently, it is used by many manufacturers of processed foods such as frankfurters, and is added to the meat emulsion, where it is seen to inhibit the growth of *Listeria* after thermal processing.

It has been found that a preferred antibacterial composition is an aqueous composition of nisin and at least one antioxidant, in a concentration effective to kill pathogenic Listeria, when this composition is on the surface of a food product that has been thermally processed in a food casing. It has also been found that another preferred composition is the preferred antibacterial composition in conjunction with a food product that contains an acceptable salt, such as sodium lactate and sodium diacetate, wherein the acceptable salt is present in concentrations effective to inhibit the growth of any *Listeria* not killed after thermal processing in a casing containing the preferred composition on its food contacting interior surface.

The present invention may be characterized in one aspect thereof by a cellulose or plastic film or casing used in the processing or packaging of a food product, the film having a surface for direct contact with the food product coated with an amount of the antibacterial composition comprising nisin and an antioxidant, wherein the composition is transferable from the film to the surface of the foodstuff processed or packaged in the film, and the amount of antibacterial composition present is in an amount effective to kill pathogenic *Listeria* upon contact with the surface of the processed foodstuff, and to inhibit the growth of any remaining *Listeria*, as compared to foodstuffs processed in film or casing lacking such antibacterial composition.

The film or casing described above may be coated with an antibacterial composition on its food-contacting surface comprising nisin and an antioxidant, wherein the antibacterial is present in an amount effective to kill pathogenic *Listeria* upon contact with the surface of the processed foodstuff.

The foodstuffs processed or packaged in the coated film or casing may be selected from the group consisting of cheese, meat, poultry, meat-substitutes, and processed or cooked meat or poultry, including, for example, frankfurters, sausages and deli meats.

It is to be noted that the agent coated on the film surface may or may not exist solely as a surface coating. For example, the agent may penetrate the cellulosic structure of a casing as the cellulose absorbs a liquid solvent of the solution containing the agent. Alternatively, a nonabsorptive thermoplastic film, or a cellulosic film having a barrier coating that prevents impregnation or a multilayer film that allows partial impregnation up to a barrier layer may be used. As used herein, "coating" is to be understood to mean that the film wall is not necessarily impregnated but may only have the antimicrobial composition on the surface thereof, but the term may also apply where the film wall is interspersed or impregnated with the composition. In any case, in use, the composition should be releasable from the film and transferable to the foodstuff surface to the extent necessary to provide an antimicrobial effect on the surface of the foodstuff.

Another embodiment of the present invention is a method of reducing the numbers of and inhibiting the growth of *L. monocytogenes* on the surface of food that has been thermally processed, which comprises coating the food-contacting surface of a cellulosic or polymeric casing or film with an aqueous antibacterial composition comprising nisin and optionally antioxidants, and stuffing the coated casing with foodstuffs such as cheese, meats, poultry, meat-substitutes, or processed meats, such as frankfurters and sausages, and processed poultry. The foodstuffs which contain salts such as sodium or potassium lactate and diacetate are then thermally processed, and during such processing are exposed to the antibacterial composition on the casing where the antibacterial composition migrates from the casing to the surface of the foodstuffs. The casings may either remain on the foodstuff, or may be removed. In either case, the inventive antibacterial composition remaining on the processed foodstuff has a bactericidal effect on *L. monocytogenes.* The effect seen is a bactericidal one that is sufficient to produce an initial kill of the pathogen of greater than 1 log generally to about 2 logs from the initial contamination of the *L. monocytogenes* and to inhibit the growth of *L. monocytogenes* after the removal of the film from the foodstuff for a time greater than that seen when foodstuffs are processed inside casings or films having no antibacterial coating enclosing foodstuffs without any bacteriostatic salts.

Still another embodiment of the present invention is a method of reducing the numbers of and inhibiting the growth of *L. monocytogenes* on the surface of food that has been thermally processed, which comprises coating the food-contacting surface of a cellulosic or polymeric casing or film with an aqueous antibacterial composition comprising nisin and antioxidants; combining foodstuffs to be processed, such as cheese, meats, poultry, meat-substitutes, or processed meats, such as frankfurters and sausages, and processed poultry with acceptable salts, such as sodium or potassium lactate and sodium or potassium diacetate; and stuffing the prepared foodstuffs into the coated casing. The foodstuffs are then thermally processed, and during such processing are exposed to the antibacterial composition, where the antibacterial composition migrates from the film or casing to the surface of the foodstuffs. The casings may then either remain on the foodstuff, or may be removed. In either case, the antibacterial composition that migrated to the processed foodstuff has a bactericidal effect on *L. monocytogenes,* while the acceptable salts in the foodstuff have a bacteriostatic effect. We have discovered that in less than a day from processing, there is an initial kill of *L*. *monocytogenes* of greater than 1 log, usually greater than 1.5 log, and up to about 2 logs, when measured against an initial inoculation of *Listeria* immediately after the foodstuff has been released from its casing. Additionally, regrowth of *Listeria* has been found to be inhibited for up to and possibly greater than 70 days after processing and inoculation.

Many different types of food processing or packaging film may be coated with the antibacterial composition. For example, heat shrinkable plastic films conventionally are used either as wraps or as bags to package cheese, fresh meat or poultry; heat shrinkable bags are also used in the cooking of processed meats and poultry, as well as final packaging; while cellulosic casing is used in the manufacture of frankfurters, bologna and other processed meat products and sausages. In these bags and casings, the preferred antibacterial composition is applied to the food contacting surface of the film. The present invention in particular is useful in the form of a cellulosic casing for sausage manufacture wherein the antibacterial composition is applied to the interior surface of the food casing as a component of the solution sprayed into the interior of the casing during a shirring operation. Standard aqueous shirring solutions may include slip aids, surfactants, antioxidants, anti-pleat lock agents, and waxes, all well-known in the art. In the case of the shirring solution, the shirring solution delivers from about 0.75 mg. to about 2.0 mg. of nisin and from about 1.1 to about 1.7 mg. of antioxidant per 100 square inches of casing, which provides acceptable static results against *Listeria.* In an antibacterial system (as described below), the shirring solution would be as described above, and bacteriostatic salts are incorporated into the meat emulsion or foodstuff at a concentration at from 1.0 wt.% to about 4.0 wt. %, based on the weight of the meat emulsion or the foodstuff. More preferred results are found when from about 0.9 to about 1.5 mg of nisin and from about 1.2 to about 1.6 mg. of antioxidant per 100 square inches of casing and the salts would be present in the foodstuff at a concentration from about 1.8 wt. % to about 3.2 wt.%, based on the weight of the meat emulsion or the foodstuffs. The most preferred results are found when the nisin is present at from about 1.1 to about 1.3 mg. and the antioxidant at from about 1.2 to about 1.5 mg per 100 square inches of casing and the salts are present in the foodstuff at a concentration from about and from about 2.0wt. % to about 2.75wt.%, based on the weight of the meat emulsion or foodstuff.

The acceptable salts are mixed into the food product, and during processing, the antibacterial composition is transferred from the film to the surface of the food product, which also puts the antibacterial composition in contact with the acceptable salts. In this embodiment of the invention, *L. monocytogenes* is also both killed and the growth of any remaining *Listeria* is inhibited.

In many cases where the food product is processed in the cellulose or plastic film, the initial packaging is removed and the food product is repackaged for retail. Accordingly, a further important characterization of the present invention is that the ability of the composition of the nisin and the antioxidant, in combination with the foodstuff which contains acceptable salts, to inhibit any *Listeria* growth due to any Listeria which is not killed by the nisin, during the storage of the repackaged foodstuff.

Another embodiment of the present invention to reduce contamination by *Listeria* in foodstuffs processed or packaged in film or casing, is an antibacterial system comprising:
1) a cellulosic or polymeric food processing or packaging film used in the processing or packaging of a foodstuff and having a coating on the food contacting surface of an antibacterial composition of nisin and antioxidants, in an amount to have a bactericidal effect on *Listeria* species upon contact; and
2) a foodstuff encased in the film, where prior to stuffing, the foodstuff is mixed with acceptable salts, in an amount sufficient to have a bacteriostatic effect on *Listeria* species after the foodstuff is processed.

An additional embodiment of the present invention is the foodstuff that is processed in cellulosic or plastic film in which the film has a surface for direct contact with the foodstuff that is coated with an amount of an antibacterial composition, comprising a nisin and an antioxidant wherein the antibacterial composition is transferred from the film to the surface of a food product. The processing step is cooking or pasteurizing, and the foodstuff is a foodstuff such as cheese, meats, poultry, meat-substitutes, or processed meats and poultry. In particular, the foodstuffs are sausages or frankfurters. A still further embodiment includes incorporating acceptable salts into the foodstuff to be processed in the casing or film as described immediately above.

Additionally, it is believed that the stability and activity of the bacteriocin used in any embodiment of the invention as described above can be protected by coating or encapsulating the bacteriocin. This coating or encapsulation would protect the bacteriocin polypeptide from damage incurred by, for example, heat, moisture, the addition of liquid smoke during the cooking process, etc. This is particularly important when it is understood that, for example, a casing product containing the inventive composition is produced by incorporating the bacteriocin in an aqueous shirring solution, while nisin is inherently degraded by moisture. Additionally, such casing product is generally inventoried for periods greater than just a few days, and possibly at high temperatures, as for instance, during hot summer months in a warehouse. Coating and encapsulation technology is well-know in the art, and in particular the pharmaceutical and drug-delivery arts, and also in the food (such as baking and flavoring) arts. Various means to encapsulate the bacteriocin include liquid/liquid systems, polymeric systems, sugar systems, etc. Once the bacteriocin is protected, for instance by being encapsulated, it can be used in the shirring solution in the same manner as is the unencapsulated material. Or, if the bacteriocin is applied to the surface of the casing without the use of shirring solutions, the protected bacteriocin can be applied in the same manner, while retaining its activity while subjected to moist and/or hot environments in the casing Once the casing containing the protected bacteriocin is stuffed with a foodstuff, such as a meat emulsion, and thermally processed, the protection or encapsulation around the bacteriocin will release the bacteriocin, thereby insuring that the antibacterial is available against *Listeria*.

Therefore, another embodiment of the present invention is the use of a suitable bacteriocin, including the lanthionine bacteriocins, such as nisin, or Pediococcus-derived bacteriocin pediocin that is encapsulated or protected in any manner to reduce or eliminate the degradation of the bacteriocin in any of the embodiments described herein whereby the protectant releases the bacteriocin upon the normal use of the casing.

The following experiments are examples of the preferred embodiments of the present invention, and are not intended to limit the scope of the invention.

The patents and references referred to herein are incorporated in the specification by reference in their entirety.

### BRIEF DESCRIPTION OF THE FIGURES

Figure 1 illustrates combined data for field trials.
Figure 2 illustrates control verses NOJAX AL in field test.
Figure 3 illustrates linear relationship of test data in field test.
Figure 4 illustrates a 2 log kill with NOJAX AL in field test.
Figure 5 illustrates a 2 log kill with a log 6 CFU inoculum level.
Figure 6 illustrates a 2 log kill with a log 4 CFU in laboratory test.

### EXAMPLE 1

### General Procedures

Conventional cellulose food casings known as Nojax EZ Peel®, and sold by Viskase Corporation, located in Willowbrook, Illinois, USA, are a type commonly used in the manufacture of frankfurters. This casing was shirred using the following shirring solutions:

**TABLE 1**

| **Component** | **1A (%)** | **1B (%)** |
|---|---|---|
| Distilled water | 80.2 | 72.43 |
| CMC 7LF* | 1.4 | 0.70 |
| propylene glycol | 18.0 | 18.00 |
| Tween 80** | 0.4 | 0.20 |
| sodium erythorbate monohydrate | na | 0.10 |
| nisin | na 8.57 | |
| Total | 100.00 | 100.0 |

| | | |
|---|---|---|
| *a carboxymethylcellulose sold by Hercules Corp. | | |
| **a polyoxyethylene 20 sorbitan monooleate surfactant sold by ICI Americas Inc. | | |

Casing shirred with solution 1A was used to form frankfurters of the control group and casing with solutions 1B were used to form test frankfurters. The application rate during shirring was sufficient to deliver the solutions on the casing at loading of 350, 700, and 612 mg. per 100 square inches of casing surface for 1A and 1B respectively.

The casings were stuffed with a commercially manufactured three meat (turkey, beef and pork) frankfurter emulsion and thermally processed. The emulsion for 1B was identical to that used for the control except that PURASAL® Optiform™-4 was added at a concentration of 2.5 weight %. Processing included an initial liquid smoke shower with a 60:20 blend of Hickory Specialties Zesti Smoke BL12N2 and water for about one minute. While holding the relative humidity constant at about 40%, the temperature was increased from 140 to 180°F (82.2°C) in five nearly equal increments over a period of about twenty-three minutes held at this temperature for another 30 minutes, then increased to 190°F and held for about 1 minute. This cooking cycle was followed by a fifteen minute cold water shower and a 15 minute brine shower. The cooled frankfurters were peeled, packaged into plastic bags at one stick per bag, and shipped under refrigeration to a test laboratory for inoculation.

At the test laboratory, the frankfurter samples were refrigerated, and inoculated with about a five log count of cell forming units ("CFU")/package of a *Listeria* mixture comprising American Type Culture Collection numbers ATCC 51777 (serotype 4B), ATCC 984, and ATCC 19115 (serotype 4B). The franks were packaged four per bag, and massaged to obtain even distribution of the inoculum, vacuum packaged, and stored at 40°F (4.4°C). Five packages of each type of frankfurter treatment were sampled at predetermined intervals by opening the package, and rinsing the surfaces of the franks with 40 ml of Butterfield's phosphate buffer. The first predetermined interval was less than 4 hours after inoculation, and is shown in the "0" category of Table 2. The log *Listeria* count (done on Modified Oxford Media) was recorded at each interval. Count data was converted to CPU/package and the average of the five packages was converted to log base 10 as shown in Table 2.

**TABLE 2**

| MOX Listeria Count Data in Log₁₀ CFU/Package | | |
|---|---|---|
| Day | 1A | 1B |
| 0* | 5.63 | 3.83 |
| 7 | 5.31 | 3.63 |
| 14 | 5.36 | 3.64 |
| 21 | 5.62 | 3.68 |
| 28 | 5.47 | 3.49 |
| 35 | 6.00 | 2.99 |
| 49 | 6.32 | 3.37 |

| | | |
|---|---|---|
| * Day 0 time varies from 2-4 hours depending on sample inoculation time before reading | | |

Control frankfurters (1A) without any antibacterial treatment showed a higher level of initial *Listeria* accompanied with a greater amount of growth over time. The frankfurters 1B treated with nisin alone showed an immediate *Listeria* kill versus the control.

### EXAMPLE 2

This example illustrates stabilization of nisin activity during antimicrobial casing storage. The example illustrates the unexpected lower usage rate of antibiotic and reduced production cost of antimicrobial casing to make it economical feasible for industry use.

Minimum inhibition concentration assays (MIC) were used throughout the studies to measure nisin activity. The MTC test was conducted in Trypticase soy broth (TSB) with *L*. *monocytogenes* as the indicator organism or in M-17 broth with *L. cremoris* as the indicator.

### Study 1. Nisin activity loss during storage periods from antimicrobial casing.

Casing (CD0010/31-1) was stored at 4°C and 37°C for 2 months and was tested for residue nisin activity. Casing was sampled by measuring a certain flattened length, cut into pieces, and blended with 100 ml 0.02N HCl. The extracts were adjusted to pH 5 and then heated at 80°C for 30 min. The heated casing extracts were cooled to 25°C and blended again for 30 seconds before passing through 0.45 micron filter. Control casing extract was prepared in the same manner but was immediately frozen. The activity test was conducted in Trypticase Soy Base broth at pII 5.0 at 30°C with *L. monocytogenes* as the indicator. The data is summarized in Tables 3 and 4.

**TABLE 3**

| **Nisin residue activity extract from casing after storage** | | | |
|---|---|---|---|
| | Optical Density @ 550 | | |
| % Casing extract | 4°C 2 month | 37°C 2 month | 0 time control |
| 1.25 | 0.27 | 0.29 | 0.27 |
| 2.5 | 0.06 | 0.23 | 0 |
| 5 | 0 | 0.12 | 0 |
| 10 | 0 | 0 | 0 |
| MIC | 2.5-5% | 10% | 2.5% |
| Activity loss | 25 | 75 | 0 |
| | (Average of 0 and 50%) | | |

**TABLE 4**

| **Nisin activity loss in casing shirring solution (pH 5.0) at 25°C and 37°C with or without antioxidant Sodium Erythorbate** | | | | | | | |
|---|---|---|---|---|---|---|---|
| Treatment | | % activity lose from day 0 | | | | | |
| | d-0 | d-7 | | d-22 | | day-30 | |
| **25°C** | | | | | | | |
| Shirring B* | | 0 | 50 | | 75 | | 75% |
| | | | | | | | |
| Shirring B/Er^ | 0 | 25 | | 50 | | 70% | |
| | | | | | | | |

| **37°C** | | | | | | | |
|---|---|---|---|---|---|---|---|
| Shirring B* | | 0 | 50 | | 75 | | 75% |
| | | | | | | | |
| Shirring B/Er^ | | 0 | 25 | | 50 | | 70% |

| | | | | | | | |
|---|---|---|---|---|---|---|---|
| * Nisin alone | | | | | | | |
| ^ Nisin plus sodium erythorbate | | | | | | | |

### Study 2. Effect of vacuum packing on Novasin (nisin) stability in antimicrobial casing

• Antimicrobial casing was stored at 4°C and 37°C with (C-2/vac) or without (C-2) vacuum packing.
• Casing was sampled by measuring certain lengths of flattened casing, cut into pieces (1 x 1), and blended with 100 ml 0.02N HCl. The extracts were adjusted to pH 5 and then heated to 80 C for 30 minutes. The heated casing extracts were cooled to 25°C and blended again for 30 seconds before passing through a 0.45 micron filter. Casing extract prepared in the same manner at 0 time was kept frozen and used as the control. The activity test was conducted in TSB broth at pH 5.0 at 30C with *L. monocytogenes* as the indicator. The data is illustrated in Table 5.

**TABLE 5**

| **Nisin residue activity extracted from casing with or without vacuum packing** | | |
|---|---|---|
| Casing | MIC % extract | % activity loss |
| 0 time | 0.8 | 0 |
| week-1 | | |
| 4°C | | |
| C-2 | 0.8-1% | 0-20% |
| C-2/Vac | 0.8 | 0 |
| | | |
| 37°C | | |
| C-2 | 1.6 | 50% |
| C-2/Vac | 1.0 | 20% |
| | | |
| week-2 | | |
| 4°C | | |
| C-2 | 0.8-1.0 | 0-20% |
| C-2/Vac | 0.8 | 0 |
| | | |
| 37°C | | |
| C-2 | 1.6 | 50% |
| C-2/Vac | 1.6 | 50% |
| | | |
| Week-8 | | |
| 4°C | | |
| C-2 | 0.8-1.0 | 0-20% |
| C-2/Vac | 0.8 | 0 |
| | | |
| 37°C | | |
| C-2 | 2.0 | 75% |
| C-2/Vac | 1.6 | 50% |

The following conclusions can be drawn from the studies:
- Novasin (nisin) experiences slight activity loss (20 to 25%) in cellulose casing (Table 3) and casing shirring solution (Table 4) at 4°C and severe activity loss (50-75%) at 25°C and 37°C in 2 months.
- The activity loss occurred primarily during the first 2 weeks of storage (Table 4).
- Using antioxidant in the formulation could delay the activity loss for about 1-2 weeks at 25°C (Table 4).
- Keeping the antimicrobial casing in vacuum packaging could delay or reduce the activity loss at 25°C (Table 5).
- Refrigeration plus vacuum will significantly prevent nisin activity losses during storage.

### EXAMPLE 3

The Novasin antibacterial powder was shown to have a relatively large particle size distribution causing the antibacterial solids to quickly settle in the internal shirring solution ("ISS") formula. Roughly, the average size of the solids is a particle size of about 85 microns. This causes difficulty in delivering a uniform application of the active ingredient to the internal surface of the casing. This example describes the ability of high shear, through a ball mill, to effectively reduce the solids settling rates without damaging the nisin content.

A representative lot of Novasin was treated with a laboratory ball mill operation at Eiger Machinery, Inc., as seen in Table 6. The initial test showed excellent solids settling performance after a 5 minute treatment but an unacceptable drop in nisin content was seen at the ambient tcmpcraturc of the milling. A second trial was conducted with coolant on the mill jacket, targeting a temperature in the range of 40-45 degrees F. Results indicated the nisin content to be unaffected at these temperatures while the solids settling rates were again drastically reduced at a couple of mill speeds (rpm). The roughly average particle size was seen to be about 5 microns. Regression of the data indicates greater than 95% stability after 4 minutes of milling.

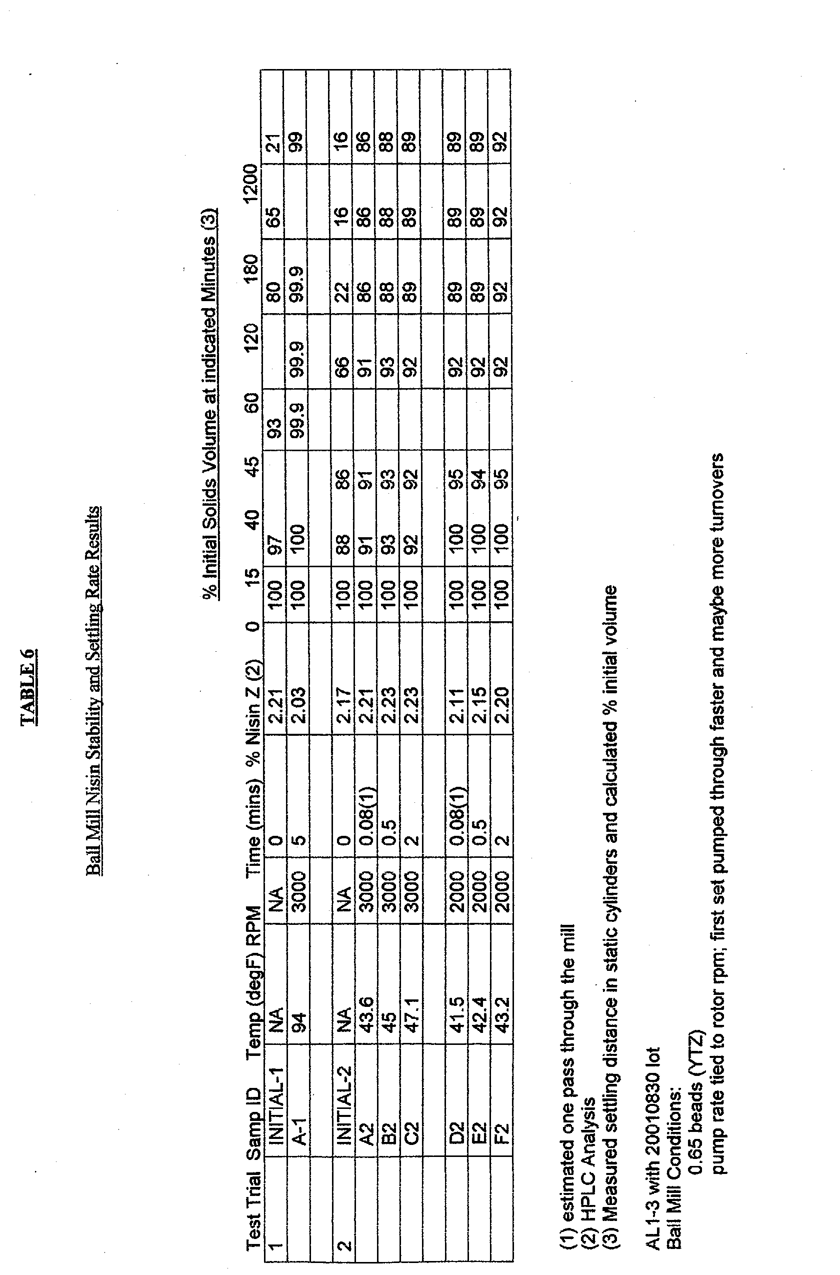

### EXAMPLE 4 - Antibacterial Stabilization

This anti-Listeria test was designed to evaluate 5 different combinations of inhibitor systems on a 3-meat hotdog (turkey, beef and pork) contaminated with a single dosage level of 500 cfu/pkg. of a *Listeria monocytogenes* cocktail. Samples were evaluated after 1, 7, 14, 21, 28, 35, 57 and 70 days of incubation at 40 deg. F (4.4 deg. C).

A. This study shows that Novasin, applied to the inside of the casing during shirring is effective in reducing an initial level of *L*. *monocytogenes* of about 500 cfu/pkg. by approximately 1.5-2 logs or 30-100 times. For the first 28-40 days, the three formulations with 60 mg./100 sq. in. of casing maintained these initial kills. The system containing 60 mg. Novasin/100 sq. in. of casing and 2.5wt. % Purac® in the meat emulsion, maintained the initial reduction for the full 70 days of the test. By contrast, the samples without Novasin or with the Purac® ingredient system alone, had initial reduction factors of 0.3-0.8 logs, i.c., 2-6 fold kill which were similar to those of the control, about 1.5-3 fold kill. The system containing 40 mg. Novasin/100 sq. in. of casing reduced *Listeria* count by a factor of 0.5-1.1 logs, about 3-10 fold. It appears that a level of at least 60 mg. nisin (Novasin from Rhodia)/100 sq. in. of casing is required for a functional initial kill. However, long term stasis was not achieved without Purac®. This data is summarized in Table 7.

**TABLE 7**

| **Reduction Factors and Return Times for the Various Anti-Listeria Formulations** | | |
|---|---|---|
| Treatment* | Reduction Factor** | Return Time*** |
| None | 2 - 6 | 35 |
| 60 Novasin, 0 Purac® | 30-100 | 28-40 |
| 40 Novasin, 0 Purac® | 3-10 | 24 |
| 60 Novasin,2.5 Purac® | 50-100 | >70 |
| 2.5% Purac® | 2-6 | >70 |

| | | |
|---|---|---|
| *The data are grouped, i.e., the samples with 60 mg. Novasin are grouped, Purac® are grouped, etc., for simplicity. | | |
| **Reduction Factor, for example 2 means reduced in half, 10 means reduced to 10% of the original. | | |
| ***This is the number of days until the sample count returned to the original count after the initial kill. | | |

B. Purac® was added to the meat emulsion used at about the 2.5 wt. % level to give stasis on *Listeria* contaminated hot-dogs. Nisin antimicrobial in the shirring solution and Purac® salts in the meat emulsion provided both an initial kill and maintenance of low Listerial activity.

The various amounts of Novasin, hops extract and lysozyme which were shirred into the casing and the Purac® system was added to the meat emulsion in several of the tests. In addition, sodium erythorbate, was used to protect the Novasin against degradation by oxidation during the solution preparation, casing storage and hot-dog processing steps. The results, which are shown in Tables 8 and 9 show unexpected bactericidal protection. Table 8 shows the log₁₀ of the cfu/pkg. count and also the difference in that number and log₁₀ of the appropriate control for the same day. Thus, each day's samples are normalized for the control on the same day. Table III shows the data was the log₁₀ for a particular day and the difference between that and the log of the initial or 0 day sample which is essentially the inoculation level, 500 cfu/pkg. of casing. Since the difference in the logarithms represents the quotient of the root numbers, i.e., subtracting logs divides numbers, each point represents a "log kill factor". For example, of the difference in logs is 2 then the kill factor is 100 times because the log of 100 is 2. Thus, the graph rises as the kill factor increases and then as grow out occurs the line trends downward toward the "x" axis which is "0" kill. It then become negative as *Listeria* grow out increases.

These results show that about 60 mg. Novasin/100 sq. in the casing is required for an "initial kill" of 50-100 times, 1.7-2.0 logs.

Sodium erythorbate was added to protect the nisin. One important comparison is between experiments containing 60/120/30/0 and 40/100/30/0. The higher Novasin provides about a 2 log early kill compared to a 1 log initial kill for the lower Novasin. In addition, after about 21 days, the samples with the 40 mg. of Novasin grew out to the original level, whereas it took about 32-40 days for the 60 mg. Novasin sample to do so. When Purac® was included in the 60 mg. Novasin sample, the initial kill was best and the stasis effect of the combination, up to the end of the test at 70 days, is very significant. Many of these samples tested after 49 days, contained undetectable levels *of Listeria.* However, this was recorded at 4 cfu/pkg., which is the lowest limit of detection. Considering that the appropriate control, the sample with Purac® alone, had about 100 counts, this represents about a 1.4 log or 25 fold difference between the 0/0/0/1 and 60/120/30/1 samples after 70 days.

**TABLE 8**

| Log₁₀ CFU/PKG at Various Days Following Inoculation with L. monocytogenes Expressed as Log₁₀ Sample/( Log₁₀ Control-Log₁₀ Sample) for the Day | | | | | | |
|---|---|---|---|---|---|---|
| ays | 60/120/30/1* | 40/100/30/0 | 0/0/0/0 | 60/120/0/0 | 60/120/30/0 | 0/0/0/1 |
| 0 | 2.70 | 2.70 | 2.70 | 2.70 | 2.70 | 2.70 |
| 1 | 1.00/1.41 | 1.78/0.59 | 2.37 | 1.15/1.22 | 0.90/1.47 | 2.41 |
| 7 | 0.78/1.57 | 1.61/0.74 | 2.35 | 1.00/1.35 | 0.70/1.65 | 2.35 |
| 14 | 0.90/1.29 | 2.09/0.22 | 2.31 | 1.23/1.08 | 0.78/1.53 | 2.19 |
| 21 | 0.60/1.39 | 2.18/0.06 | 2.24 | 1.32/0.92 | 0.70/1.59 | 1.99 |
| 28 | 0.85/1.06 | 3.41 | 2.51 | 1.36/1.15 | 1.51/1.00 | 1.91 |
| 35 | 0.78/1.17 | 3.97 | 2.78 | 2.90 | 2.02/0.76 | 1.95 |
| 42 | 0.78/1.16 | 4.46 | 3.88 | 4.22 | 3.00/0.88 | 1.94 |
| 56 | 0.60/1.55 | 6.81 | 4.76 | 4.80 | 4.52/0.20 | 2.15 |
| 70 | 0.60/1.39 | 7.30 | 4.63 | 7.08 | 4.10/0.53 | 1.99 |

| | | | | | | |
|---|---|---|---|---|---|---|
| *The designation 60/120/30/1 indicates that 60 Novasin, 120 hops, 30 lysozyme, in mg./100 sq. in. were used for this test. The '1" in the last place means that the Purac® system was added to the meat emulsion at the 2.50% level. In addition, sodium erythorbate was added to the shirring solution at the 0.7 mg./100 sq. in. level. | | | | | | |

**TABLE 9**

| Log₁₀ CFU/PKG at Various Days Following Inoculation with L. monocytogenes Expressed as Log₁₀ Sample/( Log₁₀0 Days- Log₁₀ Sample)* | | | | | | |
|---|---|---|---|---|---|---|
| Days | 60/120/30/1 | 40/100/30/0 | 0/0/0/0 | 60/120/0/0 | 60/120/30/0 | 0/0/0/1 |
| 0 | 2.70 | 2.70 | 2.70 | 2.70 | 2.70 | 2.70 |
| 1 | 1.00/1.70 | 1.78/0.92 | 2.37/0.33 | 1.15/1.55 | 0.90/1.80 | 2.41/0.29 |
| 7 | 0.78/1.92 | 1.61/1.09 | 2.35/0.35 | 1.00/1.70 | 0.70/2.00 | 2.35/0.35 |
| 14 | 0.90/1.80 | 2.09/0.61 | 2.31/0.39 | 1.23/1.47 | 0.78/1.92 | 2.19/0.51 |
| 21 | 0.60/2.10 | 2.18/0.52 | 2.24/0.46 | 1.32/1.38 | 0.70/2.00 | 1.99/0.71 |
| 28 | 0.85/1.85 | 3.41 | 2.51/0.19 | 1.36/1.34 | 1.51/1.19 | 1.91/0.79 |
| 35 | 0.78/1.92 | 3.97 | 2.78 | 2.90 | 2.02/0.68 | 1.95/0.75 |
| 42 | 0.78/1,92 | 4.46 | 3.88 | 4.22 | 3.00 | 1.94/0.76 |
| 56 | 0.60/2.10 | 6.81 | 4.76 | 4.80 | 4.52 | 2.15/0.55 |
| 70 | 0.60/2.10 | 7.30 | 4.63 | 7.08 | 4.10 | 1.99/0.71 |

| | | | | | | |
|---|---|---|---|---|---|---|
| *The designation 60/120/30/1 indicates that 60 Novasin, 120 hops, 30 lysozyme, in mg./100 sq. in. were used for this test. The '1" in the last place means that the Purac® system was added to the meat emulsion at the 2.50% level. In addition, sodium erythrobate was added to the shirring solution at the 0.7 mg./100 sq. in. level. Preparation of the Antibacterial Casings: | | | | | | |

C. NOJAX® casings, nominally sizes 24 or 25 were shirred into 95 foot sticks while injecting the antimicrobial solutions with the normal peeling treatment. The compositions of the subject peeling solutions arc shown in Table 10.

**TABLE 10**

| **Compositions of Shirring Solutions for the Antimicrobial Casings** | | | | | | |
|---|---|---|---|---|---|---|
| **COMPONENT*** | **60/120/30/1** | **40/100/30/0** | **0/0/0/0** | **60/120/0/0** | **60/120/30/0** | **0/0/0/1** |
| | | | | | | |
| DI WATER | 357 | 397 | 567 | 387 | 357 | 567 |
| CMC 7LF | 4.9 | 4.9 | 4.9 | 4.9 | 4.9 | 4.9 |
| PG | 126 | 126 | 126 | 126 | 126 | 126 |
| TWEEN 80 | 1.4 | 1.4 | 1.4 | 1.4 | 1.4 | 1.4 |
| NOVASIN NISIN LOT 20001126 7/11/01 | 60 | 40 | 0 | 60 | 60 | 0 |
| Sodium Erythrobate | 0.7 | 0.7 | 0.7 | 0.7 | 0.7 | 0.7 |
| HOPS NFE LOT 10,7/11/01 | 120 | 100 | 0 | 120 | 120 | 0 |
| LYSOZYME 5/1/01 | 30 | 30 | 0 | 0 | 30 | 0 |
| | | | | | | |
| TOTAL | 700 | 700 | 700 | 700 | 700 | 700 |

| | | | | | | |
|---|---|---|---|---|---|---|
| *mg. added in shirring/100 sq. inches of casing. The "1" or "0" in the last place indicates either the presence or the absence, respectively of Purac®-Optiform-4, which contains 56% sodium lactate and 4% sodium diacetate, at the 2.5% level in the meat emulsion. | | | | | | |

A meat emulsion containing the following proportions:
67.8% turkey,
15.7% pork,
2.6% beef,
2.25% salt,
0.42% brifisol phosphate 512,
2.1% dextrose,
1.7% corn syrup.
1.9% modified food starch,
1.0% spices,
1.5% ISP,
2.5% Purac® Optiform 4, and
water
was used to produce the hotdogs, which were linked on a commercial linker. Stuffing diameters were 22.5-23.0 mm and the hot-dogs were 5.13 inches long with 2.25-2.50 twists. The stuffed hot-dogs were smoked with 40-45 second drench of liquid smoke, diluted with water at a ratio of 3(Zesti):1(water) and then cooked and peeled under standard conditions.

These hot-dogs were inoculated with 500 cfu/pkg. (cell forming units per package) of a *Listeria monocytogenes* cocktail containing ATCC 5177, serotype B; ATCC 984 and ATCC 19115, serotype 4B and vacuum packaged with 4 hot-dogs per bag. The packaged hot-dogs were stored at 38-40 deg. F. and testing samples were drawn at 1, 7, 14, 21, 28, 35, 42, 56 and 70 days and analyzed for *Listeria* growth and total plate count. Five individual packages of each treatment for each time were analyzed and the raw data was reduced to colony forming units per package, cfu/pkg. The average of the 5 analyses was either used directly or converted to the base 10 logarithm.

The results of this study again show that 60 mg. Novasin/100 sq. in. of casing were required for an initial kill of about 2 logs. Furthermore, when this was combined with the addition of 2.5% Purac®-Optiform in the meat emulsion, the initial kill was maintained for the length of the testing, which was 70 days. Purac®, alone, in the meat emulsion, gave very little initial kill but did provide stasis for the entire 70 days.

Neither hops nor lysozyme, alone or in combinations, improved the performance of casings containing nisin.

### EXAMPLE 5

The data in this cxamplc represents data from field trials whcrc the processing of frankfurters occur at meat processing plant as opposed to in the laboratory. The preparation of the meat emulsion, cooking and packaging substantially as described earlier.

The shirring solutions of Table 11 were used to treat the casing. The casings were vacuum packed and stored at 4° C prior to use.

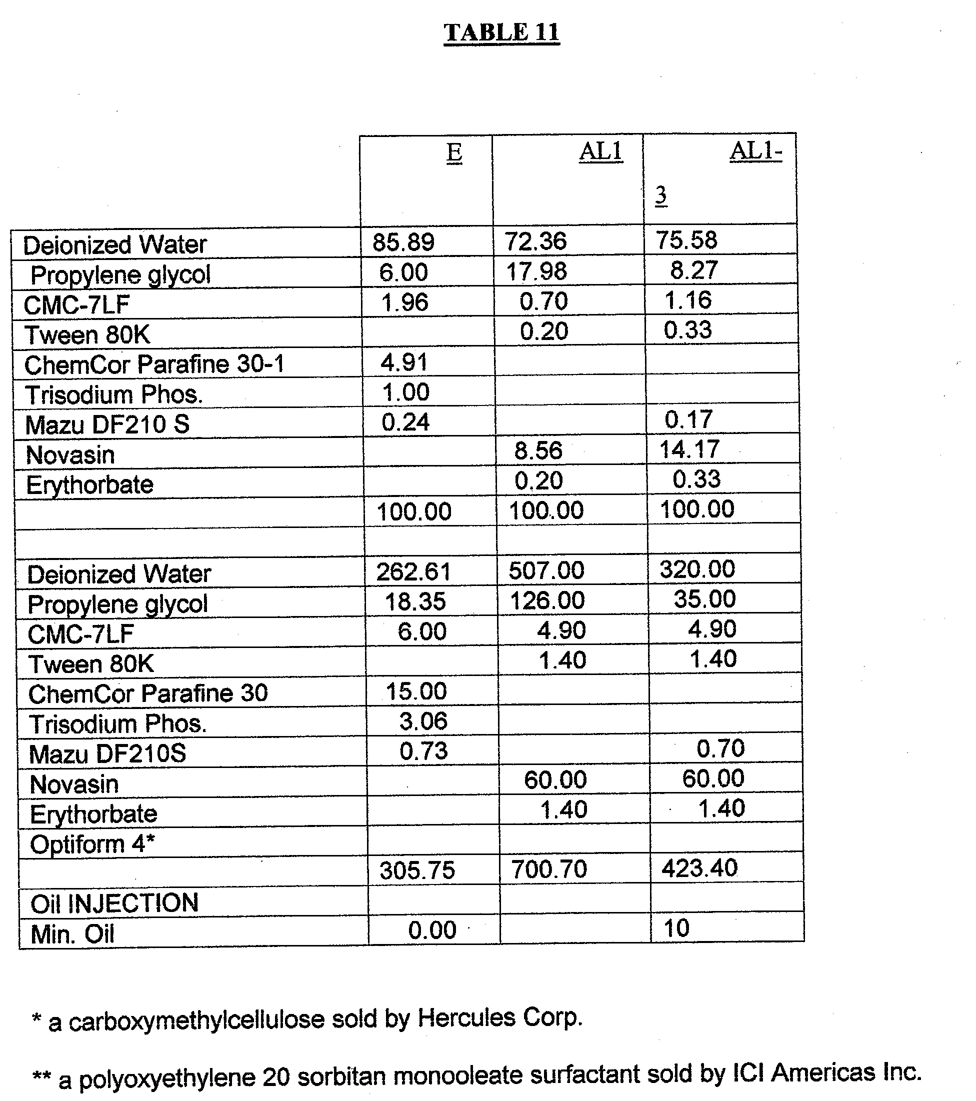

Peeled packaged product was challenged with 1.0 E4-E5 Listeria monocytogenes 5 serotype cocktail. They were repackaged in hot dogs to packaging. Analysis at 1, 6, 12, and 24 hours for Listerial survival was conducted. Long term microbial storage analysis throughout shelf life including total plate count was conducted.

The legend to the Figures is as follows:
- The control ―◆― shirring solution E is used.
- Control P ―■― represents a control with shirring E and 2% by weight of Purac (Optiform-4) as a biostatic in the meat. There is no Novasin (Nisin) or Erythorbate.
- AL-2 ―▲― is shirring solution A-L1-3 without Purac (Optiform-4)in the meat.
- AL-2P―×― is shirring solution A-L1-3 with no Purac (Optiform-4) in the meat.
- AL-3 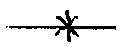 is shirring solution AL1-3 with no Purac (Optiform-4) in the meat.
- AL-3P ―●―is shirring solution AL1-3 with 2% by weight of Purac (Optiform-4) in the meat.
The line represents the initial inoculum level of *Listeria.*

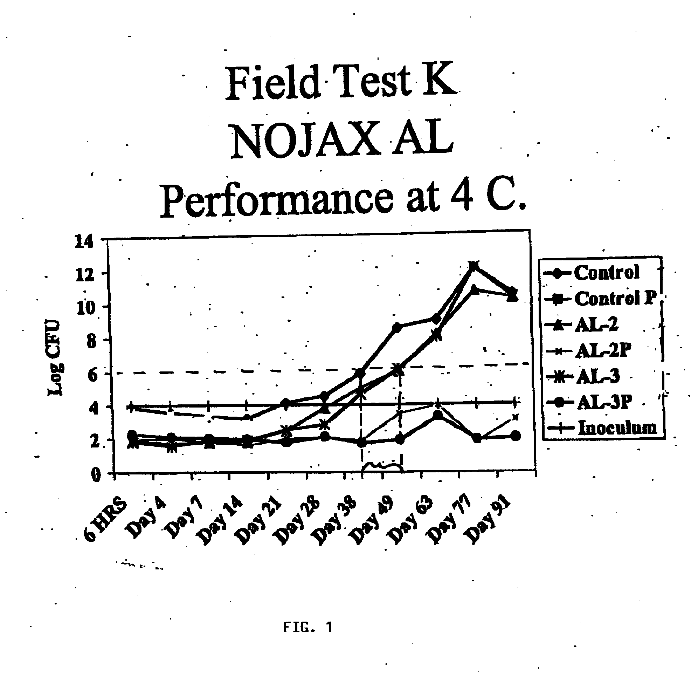

Figure 1 illustrates the combined results of the field testing.

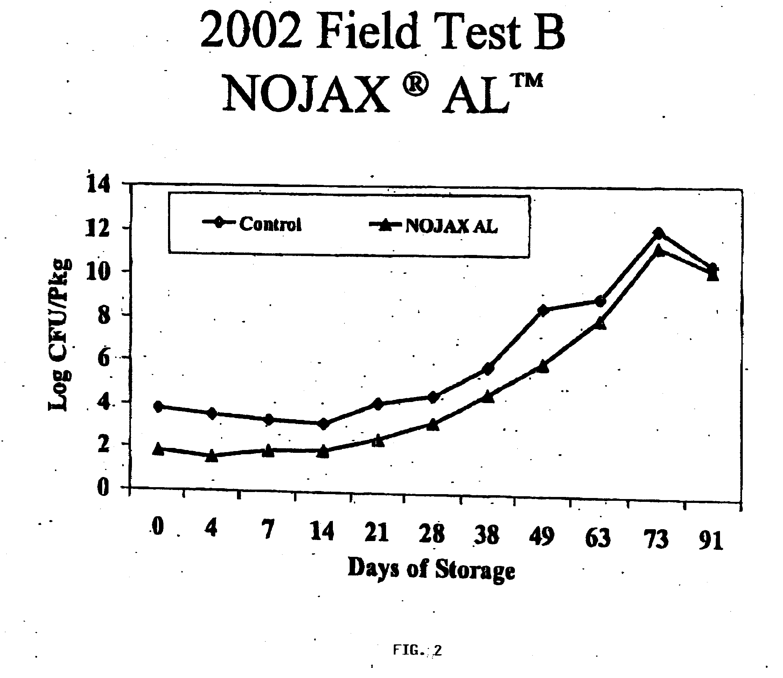

Figure 2 illustrates control verses NOJAX AL in-field test.

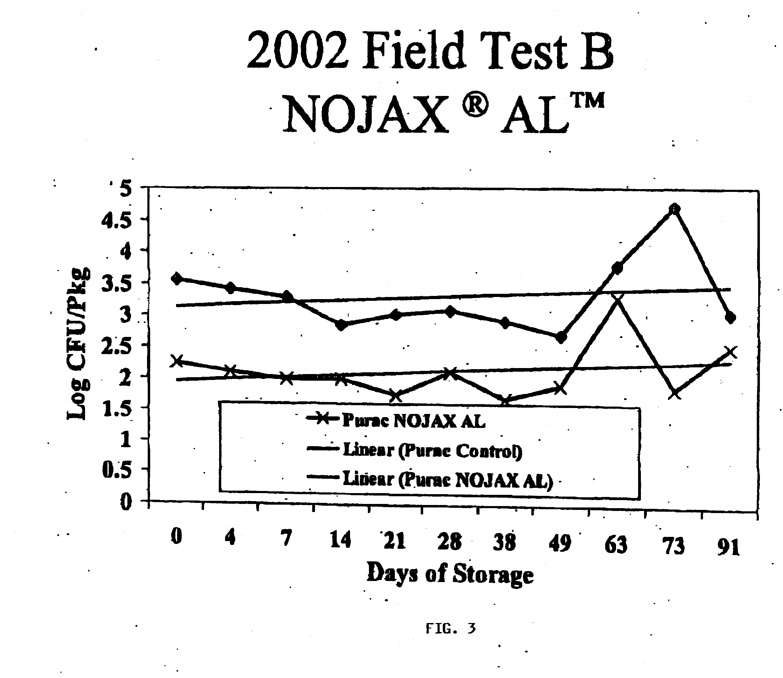

Figure 3 illustrates linear relationship of test data in field test.

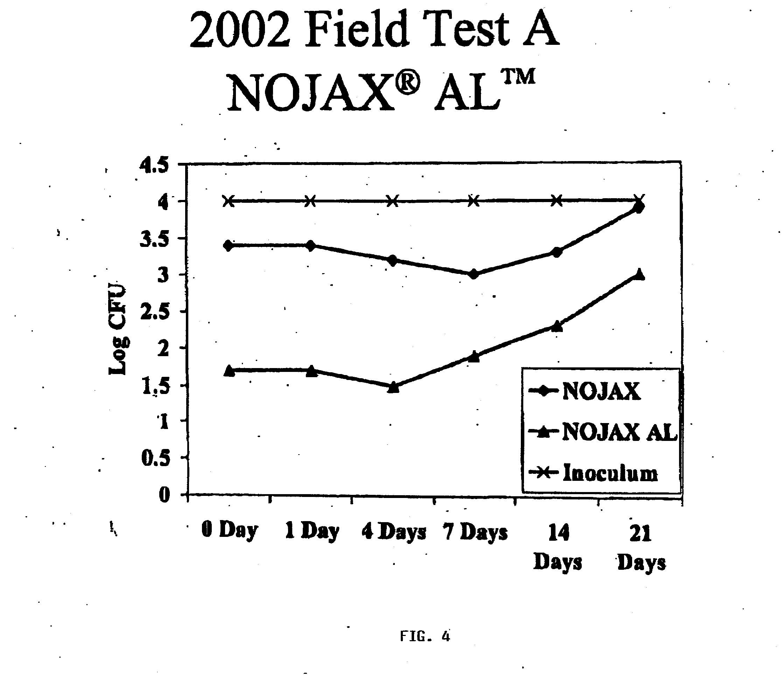

Figure 4 illustrates a 2 log kill with NOJAX AL in field test.

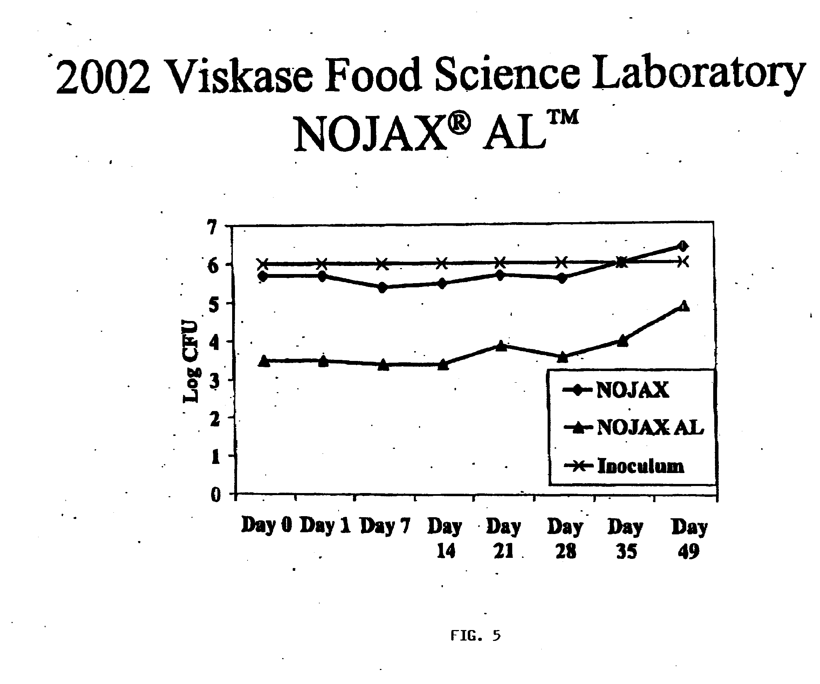

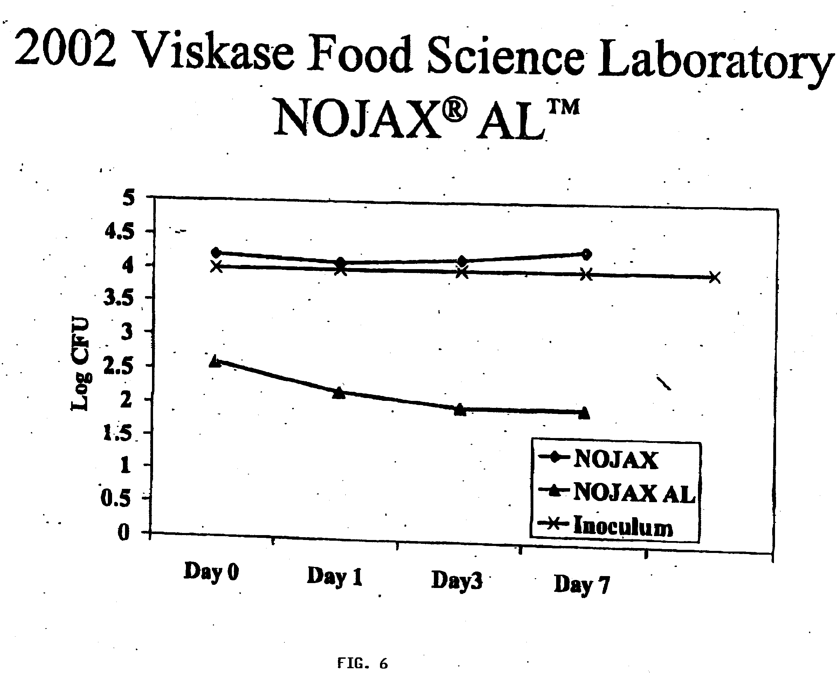

Figures 5 and 6 represent laboratory test showing 2 log hills at inoculum levels of log 4 and log 6 respectively.

## Claims

1. A casing for foodstuff processing comprising a cellulose or polymeric film having a meat emulsion contacting surface coated with an antibacterial shirring solution composition comprising an aqueous solution of the antibacterial nisin and ascorbate or erythrobate antioxidant, in an amount effective to transfer an amount of nisin to kill Listeria monocytogenes after heat processing of the foodstuff in the casing.

2. A casing according to claim 1, wherein the antibacterial is protected by encapsulation.

3. A casing according to claim 2, wherein the antibacterial that is encapsulated is pediocin.

4. A casing according to any preceding claim, comprising a tubular cellulose film having said antibacterial composition uniformly distributed over said food contacting surface resulting in a concentration of from about 0.75 to about 2.0 mg of nisin/100in² of film.

5. A meat product having a bacteriostatic amount of sodium or potassium lactate and/or sodium or potassium diacetate salt and processed using a casing according to any preceding claim.

6. A meat product according to claim 5, wherein the bacteriostatic amount of the salt is from about 1 to 4% by weight.

7. A meat product according to claim 6, wherein the bacteriostatic amount of the salt is from about 1.8 to about 3.2% by weight.

8. A meat product according to any of claims 5 to 7, where said meat product is a frankfurter.

9. A cooked foodstuff having a surface at least partially coated with nisin and sodium or potassium lactate and/or sodium or potassium diacetate.

10. A cooked foodstuff according to claim 11, wherein the nisin is encapsulated.

11. A method of inhibiting the growth of *Listeria monocytogenes* bacteria on the surface of foodstuffs comprising:
a) encasing said foodstuff in a cellulosic or polymeric film, wherein said film has a food contacting surface coated with an antibacterial composition comprising an aqueous composition of nisin and an ascorbate or erythrobate antioxidant;
b) thermally processing said encased foodstuff, thereby transferring said antibacterial composition from said food contacting surface to the surface of the encased food; and
c) optionally, removing said film from the surface of said processed foodstuff, wherein the foodstuff contains an bacteriostatic amount of sodium or potassium lactate and/or sodium or potassium diacetate.

12. A method of inhibiting the growth of *Listeria monocytogenes* bacteria on the surface of foodstuffs comprising:
a) mixing said foodstuff with salt of sodium or potassium lactate and sodium or potassium diacetate an amount effective to inhibit the growth of *Listeria* over time;
b) encasing said foodstuff in a cellulosic or polymeric film, wherein said film has a food contacting coated with an antibacterial composition comprising an aqueous composition of nisin and ascorbate or erythrobate antioxidant; and
c) thermally processing said encased foodstuff, thereby transferring said antibacterial composition from said food contacting surface to the surface of the encased food;
d) optionally, removing said film from the surface of said processed foodstuff.

13. A method according to claim 11 or 12, wherein said nisin is encapsulated.

14. A system to reduce contamination by *Listeria* in foodstuffs processed or packaged in film or casing, comprising:
a) a cellulosic or polymeric food processing or packaging film having a coating on food contacting surface of an antibacterial composition of nisin and ascorbate or erythrobate antioxidants, in an amount to have a bactericidal effect on *Listeria* species upon contact; and
b) a foodstuff encased in said film, where prior to encasement, the foodstuff is mixed with salts of sodium or potassium lactate and/or sodium or potassium diacetate in a amount sufficient to have a bacteriostatic effect on *Listeria* species after said foodstuff is processed.

15. A system according to claim 17, wherein said nisin is encapsulated.

16. A system to reduce contamination by *Listeria* in foodstuffs processed or packaged in film or casing, comprising:
a) a cellulosic or polymeric food processing or packaging film having a coating on the food contacting surface or an antibacterial composition of encapsulated pediocin and ascorbate or erythrobate antioxidants, in an amount to have a bactericidal effect on *Listeria* species upon contact; and
b) a foodstuff encased in said film, where prior to encasement, the foodstuff is mixed with salts of sodium or potassium lactate and/or sodium or potassium diacetate in an amount sufficient to have a bacteriostatic effect on *Listeria* species after said foodstuff is processed.
